# EUROPEAN PATENT SPECIFICATION

(11) **EP 4 334 833 B1**
(45) Date of publication and mention of the grant of the patent: **03.09.2025**
(21) Application number: 22719151.7
(22) Date of filing: 06.04.2022
(51) Int. Cl.: G06F 21/60, G06F 21/62

(54) **ORGANIZATIONAL DATA GOVERNANCE**
ORGANISATIONSDATENSTEUERUNG
GOUVERNANCE DE DONNÉES ORGANISATIONNELLES

(30) Priority: 03.05.2021 US 202117306780
(43) Date of publication of application: 13.03.2024
(73) Proprietor: Microsoft Technology Licensing, LLC, Redmond, WA 98052-6399 (US)
(72) Inventor: MOWATT, David, Redmond, Washington 98052-6399 (US)
(74) Representative: Page White Farrer
(86) International application number: PCT/US2022/023575
(87) International publication number: WO 2022/235369

(56) References cited:
- US-A1- 2018 027 006
- US-A1- 2019 347 429
- US-A1- 2021 026 982

## Description

### BACKGROUND

The small business segment represents millions of businesses, many of which are in early stages of growth. Typically, these small businesses, comprising the business owner and a handful of employees, often start out using computers that might also be used for family affairs. The applications used by these users may be configured with accounts in an 'individual' use mode, meaning that each user's data is protected from access by others. For example, one employee cannot access documents on another employee's computer.

While this is generally a good practice, it falls apart when the business creates documents and is not thoughtful about the location of its data, since the data is communally searchable by default, and if one employee has critical business contracts in their personal storage and that employee departs on bad terms, the business owner has no recourse to retrieve that critical data. While migrating all data from employees' individual accounts to the common business account would solve the business problems, it would also potentially copy over employees' personal documents/photos/data into the business storage at the same time - therefore a more intelligent approach to transition is required.

US2019347429A1 discloses a method for determining a level of sensitivity of information in an electronic document. In the electronic document, contents and metadata of the electronic document are scanned, and each occurrence of sensitive data is identified by classifying each portion of the contents forming the electronic document as sensitive, or not sensitive, per se.

US2021026982A1 discloses a content analysis system of an information management system can analyze data for one or more data governance tasks. The content analysis system can reduce the overhead on the information management system when identifying sensitive data by analyzing a portion of the data in the file without analyzing the entirety of the file.

### BRIEF SUMMARY

The invention is defined by the appended independent claims.

Systems and methods for providing organizational data governance are described. The described organizational data governance can analyse storage on each employee's computing device, as well as cloud storage, to classify content into work vs. personal and then apply actions to the work content such as moving the work content to a work account, archiving the work content or making the work content searchable. The described systems and methods go beyond a basic keyword tagging approach to identity entities known to two or more employees to improve the accuracy of content classification.

An organizational data governance system ("governance system") can receive a request to obtain organizational data common to a first user and a second user. The governance system can access first content of the first user and second content of the second user and identify first entities from the first content of the first user and second entities from the second content of the second user. The governance system can determine any common organizational entities between the first entities identified from the first content of the first user and the second entities identified from the second content of the second user. Then for each common organizational entity, the governance system can identify corresponding second content of the second user associated with that common organizational entity and determine whether the corresponding second content is organizational data or personal data. The governance system can perform an action on the corresponding second content determined to be the organizational data.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

**Figure 1** illustrates an example operating environment in which various embodiments of the invention may be practiced.
**Figure 2** illustrates an example process flow for providing organizational data governance according to certain embodiments of the invention.
**Figure 3** illustrates an example structure of an organizational data governance data resource according to an embodiment of the invention.
**Figure 4** illustrates components of an example computing device that may be used in certain embodiments described herein.
**Figure 5** illustrates components of an example computing system that may be used to implement certain methods and services described herein.

### DETAILED DESCRIPTION

Systems and methods for providing organizational data governance are described. The described organizational data governance can analyse storage on each employee's computing device, as well as cloud storage, to classify content into work vs. personal and then apply actions to the work content such as archiving the work content or making the work content searchable.

An organizational data governance system ("governance system") can receive a request to obtain organizational data common to a first user and a second user. The governance system can access first content of the first user and second content of the second user and identify first entities from the first content of the first user and second entities from the second content of the second user. The governance system can determine any common organizational entities between the first entities identified from the first content of the first user and the second entities identified from the second content of the second user. Then for each common organizational entity, the governance system can identify corresponding second content of the second user associated with that common organizational entity and determine whether the corresponding second content is organizational data or personal data. The governance system can perform an action on the corresponding second content determined to be the organizational data.

In some cases, customers purchasing software that is intended for individual use will be small businesses. These customers may use a family computing device for their small business. Since the family computing device is being used for personal use and business use, the family computing device may store business content along with personal content, such as children's homework, family photographs, and personal taxes.

When the business begins to grow and additional employees are hired, the small business owner may purchase business software and provide a license for each of the employees. At this point, the business owner may wish to assert more data ownership over the business content on each employee's computing device. For example, when an employee produces a business document, such as an invoice or a contract, the business owner will want to make sure that it is the business that owns/maintains that document and will not want every employee saving that document to an individual storage. Indeed, the way in which certain conversations, relationships, and contacts are all managed is something that the business may wish to say they own or govern.

With conventional organizational data governance comes the challenges around privacy. Each of the major software companies, for data processing and privacy reasons, store a user's individual content physically in a different space on different machines to where the user saves organizational data. Legal processor/controller data processing obligations may be different for individual vs. commercial data storage. The process of buying a new business license for each employee results in going from a state where everyone is using an individual license to a state where they are now additionally having a business license. As individuals make the transition from personal accounts to work accounts with shared data, the individuals may not necessarily want to share everything on their devices. The content on each employee's device and/or cloud storage may range from invoices and contracts for work to baby photos and other personal information.

This results in a process in which a system can both copy your personal baby photos to your corporate identity or your corporate storage and can lead to challenges for users where the system needs to make sure that the right documents are transferred from what would have been considered individual storage into the company's storage.

Existing data classification technology looks for keywords in a document, but nothing more. Thus, the existing data classification technology would only be able to correctly identify some sets of documents. Advantageously, the described organizational data governance techniques leverage the fact that when employees work in a business, they often share content. For example, multiple employees may work, on behalf of the business, with the same companies. Therefore, it is highly likely that the entities that that one employee works with in an organization are the same entities that another employee works with in that organization.

Thus, by looking for the entities that two or more employees have in common in an organization, the governance system can more correctly tag the subset of documents of an individual user as being business or personal. Advantageously, the described organizational data governance can tag content to separate work content from personal content. Furthermore, since users will frequently organize virtual content into folders, identifying that many documents are work related can enable the whole folder to be identified as work related.

There are also actions, which require approval from that user, that can be taken on any documents identified as business by the governance system. For example, the action can include changing the location of the document, applying a different data processing or a different data governance to the document, or applying any other kind of organizational analysis to the document.

Advantageously, through the described organizational data governance, the governance system can correct poor data storage and thus ensure correct permissions on employee documents without violating each user's privacy.

The terms "organizational," "business," "work," and "professional" may be used interchangeably herein. The terms "personal" and "private" may be used interchangeably herein. In some cases, a business owner and a business administrator refer to a same user.

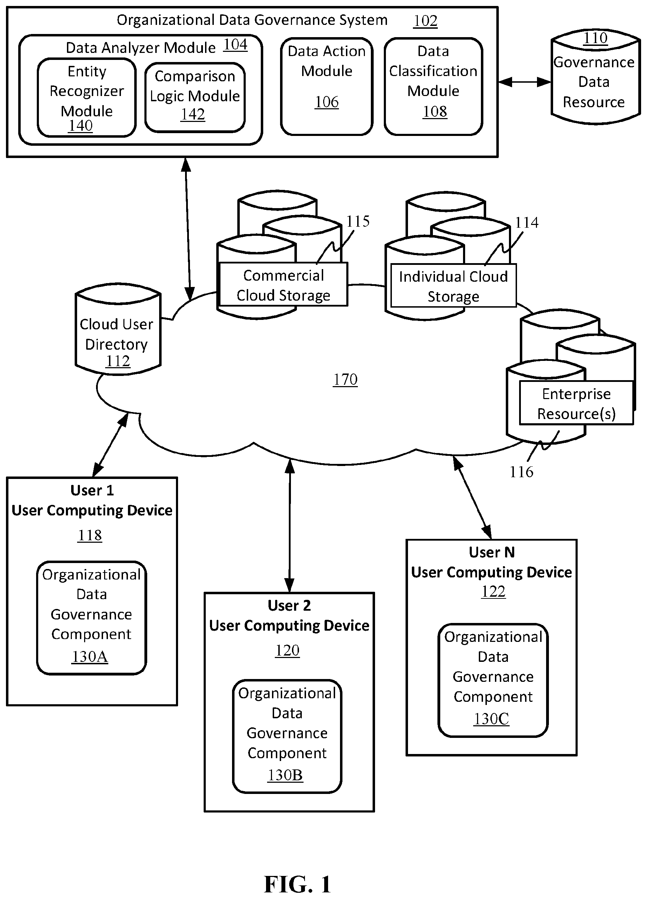

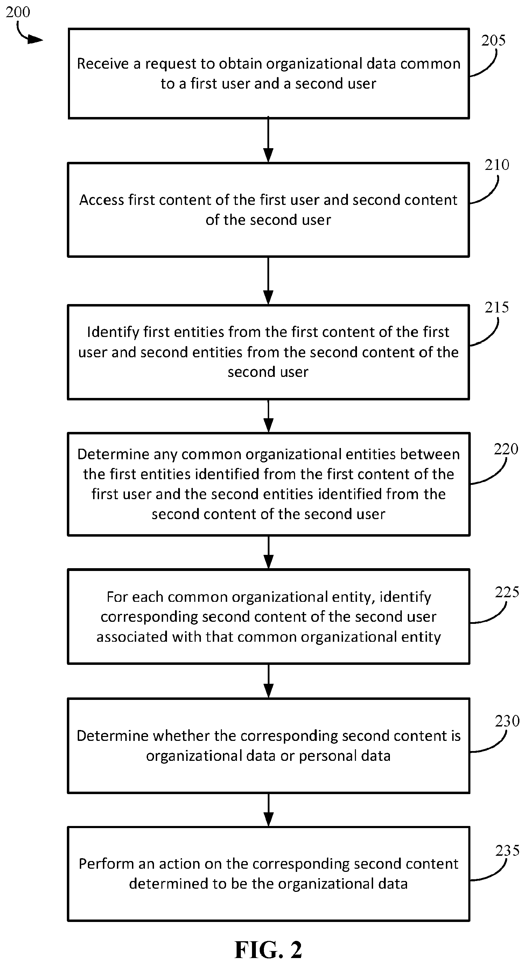

Figure 1 illustrates an example operating environment in which various embodiments of the invention may be practiced; and Figure 2 illustrates an example process flow for providing organizational data governance according to certain embodiments of the invention.

Referring to Figure 1, the example operating environment can include an organizational data governance system ("governance system") **102,** an organizational data governance data resource ("governance data resource") **110,** a cloud user directory **112,** cloud storage (e.g., individual cloud storage **114** and commercial cloud storage **115),** enterprise resource(s) **116,** one or more user computing devices (e.g., user 1 computing device **118,** user 2 computing device **120,** and user n computing device **122)** having an organizational data governance component ("governance component") **130** (e.g., governance component **130A,** governance component **130B**, and governance component **130C).**

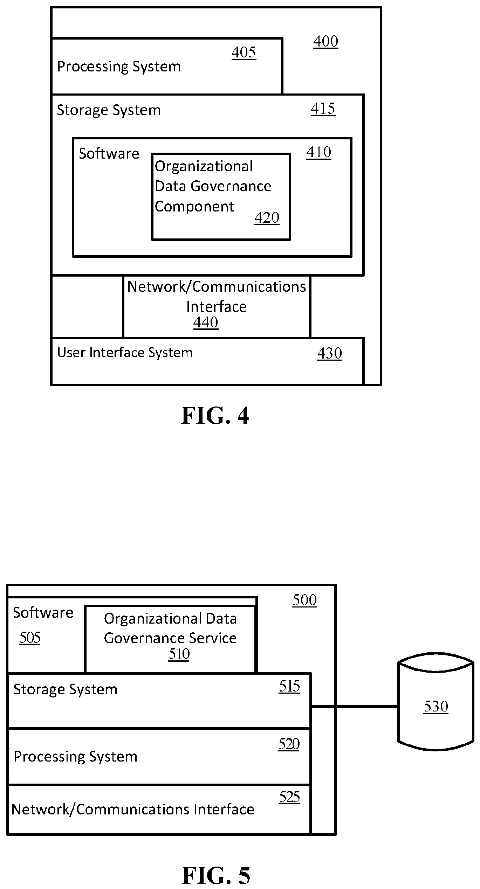

The governance system **102** can be implemented by a server which can be embodied as described with respect to computing system **500** as shown in Figure 5, and even, in whole or in part, by a user computing device, which can be embodied as described with respect to computing system **400** as shown in Figure 4.

The governance system **102** can include or communicate with several modules, including a data analyzer module **104,** a data action module **106,** a data classification module **108,** The data analyzer module 104 includes or communicates with an entity recognizer module **140** and a comparison logic module **142.** In some implementations, the modules include a computer readable storage medium having instructions stored thereon that direct a processing system (e.g., a hardware processor) to perform the functions associated with that module. In some cases, a module may have designated hardware. In some cases, a module may be executed on a virtual machine running on a host device supporting more than one module. In some cases, a module can be implemented entirely in hardware.

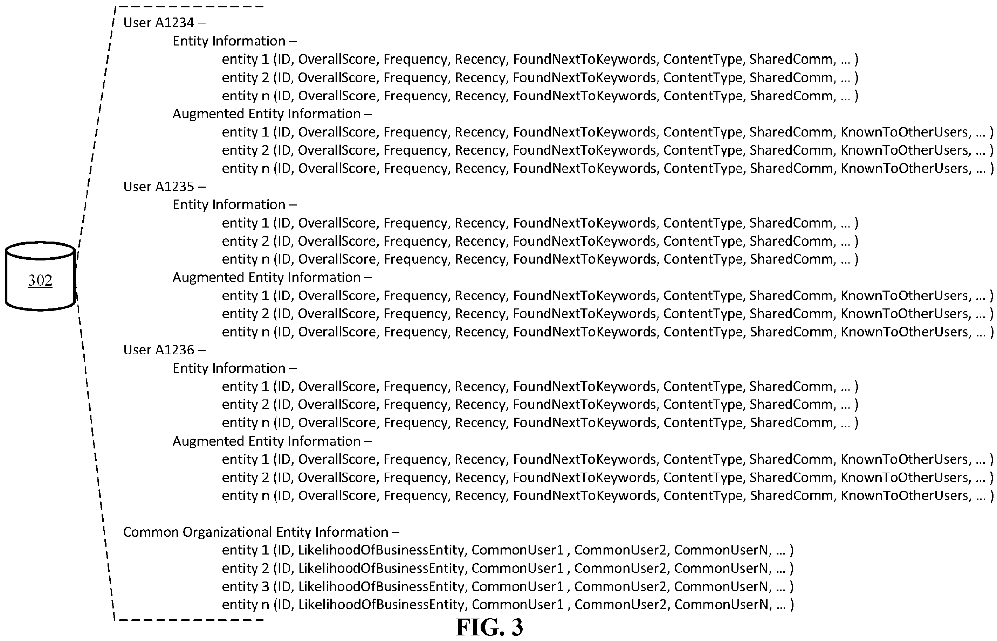

It should be noted, while modules of governance system **102** are depicted in Figure 1 (i.e., the data analyzer module **104,** the data action module **106,** the data classification module **108,** the entity recognizer module **140,** and the comparison logic module **142),** this arrangement of the governance system **102** into modules is exemplary only; other physical and logical arrangements of a governance system capable of performing the operational aspects of the disclosed techniques are possible. Indeed, the physical location of the organizational data governance system or its constituent modules will vary by implementation. It should be understood that all or part of the organizational data governance system **102** may be resident on the user's computing device, distributed across multiple machines, or even resident on a cloud storage or enterprise resource(s). Further, it should be noted that aspects of the governance system **102** may be implemented on more than one device, and each user may have a plurality of computing devices. In some implementations, some aspects of the organizational data governance are performed on the user computing device, while other aspects may be performed, at least in part by organizational data governance system **102.** For example, some or all of the features carried out by the governance system **102** may be carried out at the user computing devices via the governance component **130.** The governance system **102** may include or communicate with one or more resources, such as governance data resource **110.** Governance data resource **110** may comprise entity information and common organizational entity information parameters as structured data. The entity information can include a set of entities for each of a plurality of users. Information for each entity within the set of entities can include, but is not limited to, an entity identifier and a plurality of scores, such as an overall score. It should be understood that these data sets may be stored on a same or different resource and even stored as part of a same data structure. A more detailed discussion of the governance data resource **110** will be provided in Figure 3.

The information received, collected, and/or generated by the governance system **102** (such as obtained by the data analyzer module **104** or the data classification module **108)** may be stored on a same or different resource (e.g., governance data resource **110)** and even stored as part of a same data structure depending on implementation.

The user computing device (e.g., user 1 computing device **118,** user 2 computing device **120,** and user n computing device **122)** may be a general-purpose device that has the ability to run one or more applications. The user computing device may be, but is not limited to, a personal computer, a reader, a mobile device, a personal digital assistant, a wearable computer, a smart phone, a tablet, a laptop computer (notebook or netbook), a gaming device or console, an entertainment device, a hybrid computer, a desktop computer, or a smart television. In some cases, the user computing device may include various IoT devices, such as, but not limited to, a location tracker, access control, and an in-car system.

The cloud user directory **112** can be used to organize and manage information for a plurality of users. Users can register one or more identities with the cloud user directory **112.** The identities can be for personal accounts and/or business accounts. In some cases, individual accounts may be stored in a different directory from commercial accounts. In any case, the business administrator can record which individual accounts are part of their business.

In one scenario, a small business owner may purchase a business license for their small business and each employee of the small business can be given a new business identity. Each employee's business identity can be recorded in the cloud user directory **112** and linked to the small business owner. For example, one employee, Bob, may be given the business identity of bob@mybusiness.com, another employee, Amy, may be given the business identity of amy@mybusiness.com, and another employee, Katie, may be given the business identity of and katie@mybusiness.com.

The individual personal identities of each employee can also be recorded in the cloud user directory **112.** In some cases, the employees may have the same usernames for personal and work identities. For example, Bob, having the business identity of bob@mybusiness.com, may also have a personal account with the same username, such as bob@gmail.com.

When a user is signed into a computing device or signed into an application on a particular device, the governance system **102** can use the cloud user directory **112** to recognize each user's particular account and whether that particular account is a personal account or a business account.

Cloud storage (e.g., individual cloud storage **114** and commercial cloud storage **115)** refers to storage made available to a user over the Internet as part of a hosted service. Cloud storage can include storage for a plurality of applications. An example of a cloud storage includes Microsoft OneDrive. Content in the cloud storage can be stored associated with a particular user's account. Typically for a business, every user gets their own location in the commercial cloud storage **115** to store work content and personal content. By default, other employees do not have access to this content. In some cases, the business owner or business administrator may have access.

Enterprise resource(s) **116** may be cloud-based or available on a local network and contain, for example, personal business folders and shared business folders.

In some cases, the governance system **102** may communicate with a third-party service. That is, in cases where a user is working with multiple applications or multiple platform providers, the governance system **102** can connect with each of those providers to perform organizational data governance. For example, a third-party storage provider could provide APIs for the governance system 102 to read personal data from individual storage. Authentication to this data location would be granted at runtime, as discussed below.

Components (computing systems, storage resources, and the like) in the operating environment may operate on or in communication with each other over a network **170.** The network **170** can be, but is not limited to, a cellular network (e.g., wireless phone), a point-to-point dial up connection, a satellite network, the Internet, a local area network (LAN), a wide area network (WAN), a WiFi network, an ad hoc network or a combination thereof. Such networks are widely used to connect various types of network elements, such as hubs, bridges, routers, switches, servers, and gateways. The network **170** may include one or more connected networks (e.g., a multi-network environment) including public networks, such as the Internet, and/or private networks such as a secure enterprise private network. Access to the network **170** may be provided via one or more wired or wireless access networks as will be understood by those skilled in the art.

As will also be appreciated by those skilled in the art, communication networks can take several different forms and can use several different communication protocols.

Communication to and from the components may be carried out, in some cases, via application programming interfaces (APIs). An API is an interface implemented by a program code component or hardware component (hereinafter "API-implementing component") that allows a different program code component or hardware component (hereinafter "API-calling component") to access and use one or more functions, methods, procedures, data structures, classes, and/or other services provided by the API-implementing component. An API can define one or more parameters that are passed between the API-calling component and the API-implementing component. The API is generally a set of programming instructions and standards for enabling two or more applications to communicate with each other and is commonly implemented over the Internet as a set of Hypertext Transfer Protocol (HTTP) request messages and a specified format or structure for response messages according to a REST (Representational state transfer) or SOAP (Simple Object Access Protocol) architecture.

Referring to Figure 1 and Figure 2, the governance system **102** can perform one or more processes, such as process **200.** It should be understood that organizational data governance can be performed for more than two users (e.g., by having multiple 'second' users). However, for the sake of simplicity, process **200** is being described herein for two users (i.e., a first user and a second user). In this example, the first user is a business owner and/or administrator and the second user is an employee of the first user.

Prior to the start of process **200,** the first user can register an identity in the cloud user directory **112.** That means the first user's username is stored in the list of users in cloud user directory **112.** Similarly, the second user can also register their identity in the cloud user directory **112.**

Each user has data saved against that user account, either in cloud storage (e.g., cloud storage **114)** or on a local device (e.g., user 1 user computing device **118** and user 2 user computing device **120)** with storage where the user has permission to give a process that is tied to the user account privilege to access the hard disk (e.g., a windows application where the user is signed in with their Microsoft account).

Typically, the second user's files are inaccessible to the first user, since the first user will neither have permission (nor know the password) of the second user. Both the first user and the second user can use their local device and/or cloud storage for business purposes, but also personal purposes.

To begin the organizational data governance process (e.g., **200),** the governance system **102** can receive **(205)** the request to obtain organizational data common to the first user and the second user.

The first user can invite the second user to initiate a process to find their common organizational data. In some cases, the first user can share the name of his/her company, plus also the date at which the second user began working with the first user.

The first user can send a signal to the governance system **102** to indicate that they wish to find entities (e.g., contacts) in common with another user. In this case, the first user can request to obtain organizational data in common with the second user. To protect privacy, the identity of the second user can be recorded in the governance system **102** and linked to the identity of the first user.

In some cases, the second user can be instructed to provide explicit permission to begin the organizational data governance process. In some cases, a request for explicit permission may be shown to the user and manually clicked on. The second user may receive a notification to launch a particular wizard on their user computing device through an email application or other in-application notification. Then, through the wizard, the second user can provide explicit permission for the governance system **102** to access the second user's cloud storage account, local storage, and/or third-party services.

In some cases, the explicit permission may be given by the second user when the second user receives a business license and is given a new business identity. For example, the second user may grant rights to the business owner (i.e., the first user) to be able to run the organizational data governance process in the future.

The governance system **102** can access **(210)** first content of the first user and second content of the second user. The governance system **102** can access **(210)** first content and the second content with express permission from the first user and the second user. The first content of the first user can include content on the first user's computing device (e.g., user 1 user computing device **118)** and content on the cloud storage **114.** The second content of the second user can include content on the second user's computing device (e.g., user 2 user computing device **120)** and content on the cloud storage **114.**

The governance system **102** can identify **(215)** first entities from the first content of the first user and second entities from the second content of the second user. An entity may refer to a person, place, thing, event, task, or concept. One example of a primary entity is a username and domain. For example, colin@customer.com is a username and customer.com is a domain.

It should be understood that, although the term "entities" is used, there may only be one entity identified; and the identifying of a single entity would fall within the scope of the identifying of entities as described with respect to the methods for providing organizational data governance provided herein. In addition, the first entities identified from the first content may be the author of the first content (e.g., the name of the first user or another user). In another example, the first entities identified from the first content may be an email address. In some of such cases, the identified email address may be the email address of the first user.

Any suitable technique for identifying entities may be used. The entity recognizer module **140** of the data analyzer module **104** can identify the first entities and the second entities by performing entity recognition on the first content and the second content located on each user's local device and/or on cloud storage. Entity recognition can be performed on each user's local documents and data, as well as each user's cloud documents and data.

The entity recognition can be done by retrieving contacts from, for example, sent and received emails, sent and received IM chats, and filenames from documents. In some cases, entity recognition technology may be run on the textual content of documents, emails, meeting invites, lists and chats, etc. This can be used to retrieve commonly named companies. By analyzing email addresses of people in those communications and/or authors of documents, the domain name can further be used to identify likely companies that the employees work with. For example, the governance system **102** can detect that ACMECompany is the domain (e.g., xyz@acmecompany.com ) of a company that multiple users communicate with.

In some cases, the first user may be on the same email (or IM/communication/document) as the second user. In this case, the governance system **102** can record not just the fact that entities were discovered (e.g., the other people in the email), but can also record a signal about commonality (e.g., On_shared_document = true).

The result of identifying **(215)** the first entities from the first content of the first user and the second entities from the second content of the second user includes, for each user, a set of identified entities associated with that particular user. The set of identified entities by the governance system **102** may be stored in the governance data resource **110.** In the illustrative example, a set of first entities associated with the first user may be stored in the governance data resource **110,** along with a set of second entities associated with the second user.

In some cases, while waiting for the second user to grant the governance system **102** access, the governance system **102** can first process the first content on the first user's computing device. That is, the governance system **102** can identify the set of first entities associated with the first user and store the set of first entities in the in the governance data resource **110.** Then at a later time, when the second user accepts the invitation of the first user and grants access for those same processes to run on the second user's devices and cloud storage, a similar set of entities are extracted for the second user and stored in the in the governance data resource **110.**

At this point in process **200,** it is not known if the identified entities in each set of entities are personal entities or organizational entities. In some cases, the governance system **102** can ensure that the first user (e.g., the business owner) does not have access to read the identified entities of the second user.

In some cases, additional information is obtained for each entity, such as, but not limited to, the date of the last time the entity was contacted, the number of times the entity was contacted, the location of the document, and the number of documents received.

In some cases, each set of entities produced may have a score associated with each entity. Each entity may have an overall score for the entity ("OverallScore"). In some cases, there are multiple components to the OverallScore associated with each entity. As an example, there may be a particular score an entity receives if that entity is found in an email with another one of the users. As another example, there may be another score an entity receives if it is found in a document type recognized as an invoice. Both of these scores can be high confidence scores. Where entities were detected in documents that were shared between the first user and the second user (e.g., in an email body or email attachment), this shared document may record a high confidence score.

For example, these scores can include, but are not limited to, a frequency score ("Frequency"), a recency score ("Recency") (e.g., when was this contact most recently worked with), a shared communication score ("SharedComm") (e.g., did another user's username appear in the same email/file). Other confidence scores may be included, such as a score for the type of content in which the entity was found ("ContentType"), and a score for whether the entity was found in an email/document that contained high confidence words (e.g., quote, invoice, contract) or the company's name ("FoundNextToKeywords").

The OverallScore can be determined by adding up each of these scores to develop confidence that it is not happenstance that the users happen to have documents that share these common entities, but rather these entities are strong indicators of certain documents being for business, and other documents not.

In some cases, an entity may have a set of scores which are negative indicators of organizational data. For example, certain keywords may be identified that indicate the file is a personal document, like "personal taxes" or "family." These scores can lower the OverallScore and suggest that that entity may be generally more personal.

The governance system **102** can determine **(220)** any common organizational entities between the first entities identified from the first content of the first user and the second entities identified from the second content of the second user.

The comparison logic module **142** of the data analyzer module **104** may detect which entities are in common between the first user and the second user. The comparison logic module **142** can analyze the set of first entities and the set of second entities to determine the likelihood that a particular entity is known by both the first user and the second user. It should be understood that any suitable comparison logic may be used in the comparison logic module **142.** It should also be understood that the comparison logic module **142** can compare entities across multiple users.

As previously described, both the first user and the second user have a set of entities with certain scores (e.g., OverallScore, Frequency, Recency, FoundNextToKeywords, ContentType, and SharedComm). Using these scores and, in some cases, additional information, the governance system **102** can compute a new score, "KnownToOtherUsers" score, for each entity. The KnownToOtherUsers score can contain a pair of properties, such as the username and the combined score of how strongly that entity was detected in the other user's entity list. The KnownToOtherUsers score can be included in the set of first entities and the set of second entities to create an augmented set of entities for both the first user and the second user.

In some cases, the comparison logic **142** can include a list of known entities to ignore. Certain entities can appear in documents that are real organizational entities, but those entities may not be meaningful from the point of view of being able to identify a personal or organizational document. For example, since the word "Microsoft" may appear in every user's data in multiple places, the word may not be meaningful when identifying whether a document is a personal or organizational document. Thus, "Microsoft" may be included in a list of known entities to ignore.

The comparison logic **142** can examine the overlap between the first user and the second user by comparing the different entity scores. As an example, if the comparison logic **142** found the same name and email address across multiple users, particularly having the same work domain of "customer.com," this indicates that documents relating to "customer.com" are highly likely to be organizational data because they are shared between all these users. Thus, "customer.com" can be considered an organizational entity in common.

In some cases, the comparison logic **142** can include one or more rules to determine any common organizational entities. One simplified example of a rule can include:

```
 if (max OverallScore [any other user] > 0.05 && OverallScore
[at least one user] > 0.2), then
 (LikelihoodOfBusinessEntity = SumOfAllUserOverallScores).
```

The comparison logic **142** can produce a single sorted list of all entities that each have a single score (e.g., LikelihoodOfBusinessEntity). Any entity having a score above a certain threshold is deemed an organizational entity that are shared between the users. The output of step **220** can be a list of entities that meet a certain threshold to be deemed organizational entities in common between the first user and the second user.

As an example, the governance system **102** may discover 300 entities for each of three users, totaling 900 entities. Each user would have a set of 300 identified entities stored in the governance data resource **110.** Of those 900 entities discovered, only 400 of the entities were shared to some degree, and thus have a score that meets a certain threshold to be deemed business entities in common. The remaining 500 entities had a score that did not meet the threshold to be deemed business entities in common. Here, the output of step **220** would be the set of 400 entities that meet a certain threshold to be deemed business entities in common. Those 400 entities can be stored in the governance data resource **110.**

For each common organizational entity, the data classification module **108** of the governance system **102** can identify **(225)** corresponding second content of the second user associated with that common organizational entity and determine **(230)** whether the corresponding second content is organizational data or personal data.

Since users very often cluster content together, the governance system **102** can identify which folders on a user's device and/or cloud storage should be tagged as organizational. The governance system **102** can also identify particular items (e.g., particular files or particular emails) that should be tagged as organizational, not least since in the root folders of file folders, as well as email folders or IM chats, some users may not employ folders to organize their content.

To identify **(225)** corresponding second content of the second user associated with a common organizational entity, the governance system **102** can recursively analyze the second content on the second user's computing device (e.g., user 2 user computing device **120)** and the second content associated with the second user's account on the cloud storage **114** to determine whether the second content contains one or more of the common organizational entities. For example, the governance system **102** can recursively scan the files, including the metadata, in each folder associated with the second user. The files can include, but are not limited to, documents, spreadsheets, presentations, PDFs, emails, and chats.

The governance system **102** can determine **(230)** whether the corresponding second content is organizational data or personal data based on assigned file scores. If the content does contain one or more of the common organizational entities, the governance system **102** can produce a file score based on that entity and, in some cases, other signals in the content itself. The file score can be an organizational score and/or a personal score to indicate the likelihood it is one or the other. For each common organizational entity found in a file, the corresponding user's set of entities within the governance data resource **110** is accessed so that a combined score (e.g., LikelihoodOfBusinessEntity) may be retrieved. The combined score refers to the weighted sum of the individual scores for that entity. In some cases, the combined score of each entity found in the file may be added together to produce the file score assigned to that particular file.

In some cases, files having an assigned file score over a certain threshold can be determined to be organizational data and files having an assigned file score under a certain threshold can be determined to be personal data. In some cases, the file may be lacking file scores indicating either organizational or personal usage. In these cases, the files may be determined to be neutrally classified.

Once the content in a file is determined to be organizational data or personal data, the file can be tagged. For example, the governance system **102** can apply certain metadata tags to the file to say identify the content of the file as organizational data.

In some cases, additional analysis of the file is necessary to determine whether the content is organizational data or personal data. For example, when files are determined to be neutrally classified, additional analysis is necessary to determine whether the content is organizational data or personal data.

In some cases, further data classification may be used to provide the additional analysis of a file. As an example, a classifier may be used with thresholds to optimize accuracy of the data classification module **108,** which allows the folders to be scored for work vs. personal usage. It should be understood that the classifier may be any suitable classifier.

In some cases, the file score for the file may also incorporate the results of the classifier. For example, the further document classification can include a process where certain keywords are looked for in the document, such as budget, forecast, and quotation, or where a filetype indicates a likelihood to be organizational content, (e.g., spreadsheet files are more probably work related). For example, if the file includes the keyword "invoice" the file could receive a higher file score indicating this particular file is the user's work. In some cases, the classifier may attempt to find words indicating personal usage, such as school, birthday, and doctor.

In an example where a file with a title "Personal To-Do List" may contain multiple common organizational entities, the file may be neutrally classified as it has content indicating both personal usage and organizational usage. Here, additional analysis of the file, such as standard document classification using keywords, can help determine whether the file is to be labeled as organizational data or personal data.

In some cases, the content may be designated as organizational data or personal data on the folder level. The average file score of all the files in a particular folder may be used to determine a score for the entire folder. For example, one folder may have an average file score of 0.9 out of 1.0 and a second folder may have an average file score of 0.3 out of 1.0. Then, given a threshold chosen by a user, these average file scores could lead to a determination that the entire folder be designated as organization data or personal data.

In some cases, the governance system **102** can identify patterns in the folders and perform additional analysis to help determine whether the folder is organizational related or personal related. As an example, a folder may contain eight documents with a very high confidence of being business related. The same folder may also contain five documents which are neutrally classified (e.g., do not have a high confidence of being business related or personal related). Additional analysis, such as standard document classification using keywords, can be performed on the five neutrally classified documents to tell if in likelihood they were not only potentially business related, but also not strongly personal related.

In some cases, in addition to producing a score indicating a file or folder is either personal or organizational, the governance system **102** can also produce a score indicating how commonly shared a file is.

In some cases, once the governance system **102** identifies the corresponding second content of the second user associated with that common organizational entity and determines whether the corresponding second content is organizational data or personal data, the result can be presented to the second user. The second user can be prompted to review the classification and confirm that the list of organizational files and/or folders is correct. Here, the second user may be given an opportunity to remove or add files and/or folders.

In the case of instant messaging chats, which are organized by the pairing of the user and the contact, the "folder" is the message history of the communications between them and any documents they attached. The second user may also be shown the individual files in certain cases, such as documents in the root folders.

In some cases, the second user may be provided a pop-up a dialogue. The pop-up dialog could indicate the list of folders and/or file designated as organizational data by the governance system **102** and recommended to be moved from a personal folder to a business folder. This allows the second user an opportunity to go explore the contents of each folder and/or file folder to make alterations to the selection.

In some cases, the second user may be offered a threshold slider to view fewer or more results in order to include files that may have been misclassified due to a lack of strong signal. At this point, the second user can complete the choice of which content is organizational and which content is personal. In some cases, users can access the designations and remove an organizational designation from content at any time in the future.

The data classification module **108** of the governance system **102** can repeat step **225** and step **230** for the first content of the first user in a similar manner. That is, for each common organizational entity, the data classification module **108** of the governance system **102** can identify corresponding first content of the first user associated with that common organizational entity and determine whether the corresponding first content is organizational data or personal data.

The governance system **102** can perform **(235)** an action on the corresponding second content determined to be the organizational data. The governance system **102** can take action based on the designation of the corresponding second content as organizational data. In many cases, the goal of the organizational data governance is to ensure that content designated as organization data is formally owned by the organization.

The action can include changing the location of the document, applying a different data processing or a different data governance to the document, or applying any other kind of organizational analysis to the document.

In some cases, the content designated as organizational data may be moved or copied from the second user's personal storage to new work storage. In some cases, the business administrator (e.g., the first user) may be granted access rights to the second user's designated organizational data.

The second user may further decide that the content designated organizational data should be accessible to all users, so the action may be to share the content with the first user and any other users (e.g., user 3, user 4 and user N). Similarly, the designated organizational data may be made available to an organizational search engine, such that the content may be indexed and made retrievable by others.

In some cases, the governance system **102** performs the action on the corresponding second content determined to be the organizational data automatically. For example, any file or folder having a score above a certain threshold may be automatically moved or copied from the second user's personal storage to new work storage.

In some cases, the governance system **102** must receive express permission from the second user before performing the action on the corresponding second content determined to be the organizational data.

In some cases, when a file or folder has a score indicating that file or folder is commonly shared, the file or folder will not only be moved or copied from the second user's personal storage to new work storage, that file or folder will also be copied to a shared folder for the business. For example, the governance system **102** can propose that this file or folder get moved to a business shared folder where everyone has read and write access to it rather than having the file or folder only moved to the second user's own private business folder.

In some cases, the results of process **200** can be stored in a local cache of results on each one of the user's computing devices (e.g., user 1 computing device **118,** user 2 computing device **120,** and user n computing device **122).** In some cases, process **200** is a one-time operation the user can now use the copy of the file in the cloud storage. In some cases, the results are moved to archive folder where the file is not deleted, but the user will not mistakenly open an old copy.

In some cases, the governance system **102** can annotate the file being copied with a specific warning indicating that the file has been moved over to the user's business folder and asking if the user would like to open that copy instead.

In some cases, the action performed on the corresponding second content can include moving the content into a level of storage that has higher resiliency and greater geo redundancy, thus improving data processing.

Advantageously, the action performed on the corresponding second content can increase the security of the content. The content moved to the business storage is now owned by the business owner who now has access to any of those files and can recover any of that data if an employee leaves the business.

Figure 3 illustrates an example structure of an organizational data governance data resource according to an embodiment of the invention. Referring to Figure 3, an organizational data governance data resource **302** may be similar to governance data resource **110** described with respect to Figure 1. As previously described, an organizational data governance data resource **302** may comprise entity information, augmented entity information, and common organizational entity information. The entity information and augmented entity information can include a set of entities for each of a plurality of users. Information for each entity within the set of entities can include, but is not limited to, an entity identifier and a plurality of scores, such as an overall score. It should be understood that information for more or fewer users may be stored in the organizational data governance data resource **302.**

In the illustrative example of Figure 3, the organizational data governance data resource **302** includes entity information and augmented information for three users (e.g., User A1234, User A1235, and User A1236). Additionally, the organizational data governance data resource **302** includes common organizational entity information.

Regarding the entity information, a governance system, such as governance system **102** described with respect to Figure 1, can access content of each of the users (with express permission from the users) and can identify a set of entities for each user (e.g., entity 1 through entity n).

Each set of entities is stored as entity information for each user. In the illustrative example of Figure 3, each entity (e.g., entity 1 through entity n) includes an entity identifier ("ID") and a plurality of scores. Here, each entity is stored with a set of scores including an OverallScore, a frequency score ("Frequency"), a recency score ("Recency") (e.g., when was this contact most recently worked with), a shared communication score ("SharedComm") (e.g., did another user's username appear in the same email/file), a content type score ("ContentType") for the type of content in which the entity was found, and a keyword score ("FoundNextToKeywords")for whether the entity was found in an email/document that contained high confidence words (e.g., quote, invoice, contract) or the company's name.

As previously described, the OverallScore can be determined by adding up each of these scores (e.g., Frequency, Recency, FoundNextToKeywords, ContentType, and SharedComm) to develop confidence that it is not happenstance that the users happen to have documents that share these common entities, but rather these entities are strong indicators of certain documents being for business, and other documents not.

Regarding the augmented entity information, the governance system can use the entity information for each user (e.g., the set of entities with the OverallScore, Frequency, Recency, FoundNextToKeywords, ContentType, and SharedComm scores) to produce an augmented set of entities for each user. In the illustrative example of Figure 3, this augmented set of entities is stored in the organizational data governance data resource **302** as augmented entity information.

Using this entity information and, in some cases, additional information, the governance system can compute a new score, "KnownToOtherUsers" score, for each entity. The KnownToOtherUsers score can contain a pair of properties, such as the username and the combined score of how strongly that entity was detected in the other user's entity list. The KnownToOtherUsers score can be included in the set of entities for each user to create an augmented set of entities.

Regarding the common organizational entity information, the governance system can examine the overlap between each user (e.g., User A1234, User A1235, and User A1236) by comparing the different entity scores. As previously described, the governance system can include one or more rules to determine any common organizational entities. One example of a rule can include:

```
 if (max OverallScore [any other user] > 0.05 && OverallScore [at least one user] > 0.2), then
 (LikelihoodOfBusinessEntity = SumOfAllUserOverallScores).
```

The governance system can produce a single sorted list of all entities that each have a single score (e.g., LikelihoodOfBusinessEntity). Any entity having a score above a certain threshold is deemed an organizational entity that are shared between the users.

In the illustrative example of Figure 3, the common organizational entity information includes a list of entities that meet a certain threshold to be deemed organizational entities in common between the first user and the second user. Each of the entities in this list is referred to as a common organizational entity.

The information in the organizational data governance data resource **302** can be used by the governance system during an organizational governance process. For example, when the governance system is identifying corresponding content of a user associated with a common organizational entity (e.g., step **225** as described with respect to Figure 2), the governance system can access the common organizational entity information in the organizational data governance data resource **302.** The governance system can recursively analyze the content on a user's computing device and the content associated with the user's account on a cloud storage to determine whether that content contains one or more of the common organizational entities.

Further, the governance system can use the entity information and the augmented entity information stored in the organizational data governance data resource **302** to determine whether content is organizational data or personal data. If the identified content does contain one or more of the common organizational entities, the governance system can produce a file score based on that entity and, in some cases, other signals in the content itself. That is, for each common organizational entity found in a file, the corresponding user's set of entities within the organizational data governance data resource **302** is accessed so that a combined score may be retrieved. This score, and in some cases, other signals in the content itself, can be used to determine whether content is organizational data or personal data.

As an example, the governance system can analyze any content on User A1234's computing device and the content associated with the User A1234's account on a cloud storage to determine whether that content contains one or more of the common organizational entities stored in the common organizational entity information of the organizational data governance data resource **302.**

For each common organizational entity found in User A1234's content, User A1234's set of entities within the organizational data governance data resource **302** is accessed so that a combined score may be retrieved. That is, the entity information and the augmented entity information stored in the organizational data governance data resource **302** associated with User A1234 can be accessed so that a combined score may be retrieved and used to help determine whether the content is organizational data or personal data.

Figure 4 illustrates components of a computing device that may be used in certain implementations described herein. Referring to Figure 4, system **400** may represent a computing device such as, but not limited to, a personal computer, a reader, a mobile device, a personal digital assistant, a wearable computer, a smart phone, a tablet, a laptop computer (notebook or netbook), a gaming device or console, an entertainment device, a hybrid computer, a desktop computer, or a smart television. Accordingly, more or fewer elements described with respect to system **400** may be incorporated to implement a particular computing device.

System **400** includes a processing system **405** of one or more processors to transform or manipulate data according to the instructions of software **410** stored on a storage system **415.** Examples of processors of the processing system **405** include general purpose central processing units, application specific processors, and logic devices, as well as any other type of processing device, combinations, or variations thereof. The processing system **405** may be, or is included in, a system-on-chip (SoC) along with one or more other components such as network connectivity components, sensors, video display components.

The software **410** can include an operating system and application programs that may include components, such as organizational data governance component **420** for communicating with an organizational data governance service (e.g., running on server such as governance system **102** or system **500).** Device operating systems generally control and coordinate the functions of the various components in the computing device, providing an easier way for applications to connect with lower level interfaces like the networking interface. Non-limiting examples of operating systems include Windows^{®} from Microsoft Corp., Apple^{®} iOS^{™} from Apple, Inc., Android^{®} OS from Google, Inc., and the Ubuntu variety of the Linux OS from Canonical.

It should be noted that the operating system may be implemented both natively on the computing device and on software virtualization layers running atop the native device operating system (OS). Virtualized OS layers, while not depicted in Figure 4, can be thought of as additional, nested groupings within the operating system space, each containing an OS, application programs, and APIs.

Storage system **415** may comprise any computer readable storage media readable by the processing system 405 and capable of storing software **410.**

Storage system **415** may include volatile and nonvolatile, removable and non-removable media implemented in any method or technology for storage of information, such as computer readable instructions, data structures, program modules, or other data. Examples of storage media of storage system **415** include random access memory, read only memory, magnetic disks, optical disks, CDs, DVDs, flash memory, magnetic cassettes, magnetic tape, magnetic disk storage or other magnetic storage devices, or any other suitable storage media. In no case is a storage medium of storage system **415** a transitory propagated signal or carrier wave.

Storage system **415** may be implemented as a single storage device but may also be implemented across multiple storage devices or sub-systems co-located or distributed relative to each other. Storage system **415** may include additional elements, such as a controller, capable of communicating with processing system **405.**

Organizational data governance component **420** may be implemented in program instructions and among other functions may, when executed by system **400** in general or processing system **405** in particular, direct system **400** or the one or more processors of processing system **405** to operate as described herein.

In general, software may, when loaded into processing system **405** and executed, transform computing system **400** overall from a general-purpose computing system into a special-purpose computing system customized to retrieve and process the information for providing organizational data governance as described herein for each implementation. Indeed, encoding software on storage system **415** may transform the physical structure of storage system **415.** The specific transformation of the physical structure may depend on various factors in different implementations of this description. Examples of such factors may include, but are not limited to, the technology used to implement the storage media of storage system **415** and whether the computer-storage media are characterized as primary or secondary storage.

The system can further include user interface system **430,** which may include input/output (I/O) devices and components that enable communication between a user and the system **400.** User interface system **430** can include input devices such as a mouse, track pad, keyboard, a touch device for receiving a touch gesture from a user, a motion input device for detecting non-touch gestures and other motions by a user, a microphone for detecting speech, and other types of input devices and their associated processing elements capable of receiving user input.

The user interface system **430** may also include output devices such as display screen(s), speakers, haptic devices for tactile feedback, and other types of output devices. In certain cases, the input and output devices may be combined in a single device, such as a touchscreen display which both depicts images and receives touch gesture input from the user. A touchscreen (which may be associated with or form part of the display) is an input device configured to detect the presence and location of a touch. The touchscreen may be a resistive touchscreen, a capacitive touchscreen, a surface acoustic wave touchscreen, an infrared touchscreen, an optical imaging touchscreen, a dispersive signal touchscreen, an acoustic pulse recognition touchscreen, or may utilize any other touchscreen technology. In some embodiments, the touchscreen is incorporated on top of a display as a transparent layer to enable a user to use one or more touches to interact with objects or other information presented on the display.

Visual output may be depicted on the display in myriad ways, presenting graphical user interface elements, text, images, video, notifications, virtual buttons, virtual keyboards, or any other type of information capable of being depicted in visual form.

The user interface system **430** may also include user interface software and associated software (e.g., for graphics chips and input devices) executed by the OS in support of the various user input and output devices. The associated software assists the OS in communicating user interface hardware events to application programs using defined mechanisms. The user interface system **430** including user interface software may support a graphical user interface, a natural user interface, or any other type of user interface.

Communications interface **440** may include communications connections and devices that allow for communication with other computing systems over one or more communication networks (not shown). Examples of connections and devices that together allow for inter-system communication may include network interface cards, antennas, power amplifiers, RF circuitry, transceivers, and other communication circuitry. The connections and devices may communicate over communication media (such as metal, glass, air, or any other suitable communication media) to exchange communications with other computing systems or networks of systems. Transmissions to and from the communications interface are controlled by the OS, which informs applications of communications events when necessary.

Figure 5 illustrates components of a computing system that may be used to implement certain methods and services described herein. Referring to Figure 5, system **500** may be implemented within a single computing device or distributed across multiple computing devices or sub-systems that cooperate in executing program instructions. The system **500** can include one or more blade server devices, standalone server devices, personal computers, routers, hubs, switches, bridges, firewall devices, intrusion detection devices, mainframe computers, network-attached storage devices, and other types of computing devices. The system hardware can be configured according to any suitable computer architectures such as a Symmetric Multi-Processing (SMP) architecture or a Non-Uniform Memory Access (NUMA) architecture.

The system **500** can include a processing system **520,** which may include one or more processors and/or other circuitry that retrieves and executes software **505** from storage system **515.** Processing system **520** may be implemented within a single processing device but may also be distributed across multiple processing devices or sub-systems that cooperate in executing program instructions.

Examples of processing system **520** include general purpose central processing units, application specific processors, and logic devices, as well as any other type of processing device, combinations, or variations thereof. The one or more processing devices may include multiprocessors or multi-core processors and may operate according to one or more suitable instruction sets including, but not limited to, a Reduced Instruction Set Computing (RISC) instruction set, a Complex Instruction Set Computing (CISC) instruction set, or a combination thereof. In certain embodiments, one or more digital signal processors (DSPs) may be included as part of the computer hardware of the system in place of or in addition to a general purpose CPU.

Storage system(s) **515** can include any computer readable storage media readable by processing system **520** and capable of storing software **505** including instructions for organizational data governance service **510,** which may be or include instructions for one or more of data analyzer module **104,** data action module **106,** data classification module **108,** entity recognizer module **140,** and comparison logic module **142,** as described with respect to Figure 1.

Storage system **515** may include volatile and nonvolatile, removable and non-removable media implemented in any method or technology for storage of information, such as computer readable instructions, data structures, program modules, or other data. Examples of storage media include random access memory, read only memory, magnetic disks, optical disks, CDs, DVDs, flash memory, virtual memory and non-virtual memory, magnetic cassettes, magnetic tape, magnetic disk storage or other magnetic storage devices, or any other suitable storage media. In no case is the storage medium of storage system a propagated signal or carrier wave.

In addition to storage media, in some implementations, storage system **515** may also include communication media over which software may be communicated internally or externally. Storage system **515** may be implemented as a single storage device but may also be implemented across multiple storage devices or sub-systems co-located or distributed relative to each other. Storage system **515** may include additional elements, such as a controller, capable of communicating with processing system **520.**

In some cases, storage system **515** includes data resource **530.** In other cases, the data resource **530** is part of a separate system with which system **500** communicates, such as a remote storage provider. For example, data, such as information about common organizational entities, may be stored on any number of remote storage platforms that may be accessed by the system **500** over communication networks via the communications interface **525.** Such remote storage providers might include, for example, a server computer in a distributed computing network, such as the Internet. They may also include "cloud storage providers" whose data and functionality are accessible to applications through OS functions or APIs.

Service **510** may be implemented in program instructions and among other functions may, when executed by system **500** in general or processing system **520** in particular, direct the system 500 or processing system **520** to perform at least some of process **200** described with respect to Figure 2.

Software **505** may also include additional processes, programs, or components, such as operating system software or other application software. It should be noted that the operating system may be implemented both natively on the computing device and on software virtualization layers running atop the native device operating system (OS). Virtualized OS layers, while not depicted in Figure 5, can be thought of as additional, nested groupings within the operating system space, each containing an OS, application programs, and APIs.

Software 505 may also include firmware or some other form of machine-readable processing instructions executable by processing system **520.**

System **500** may represent any computing system on which software **505** may be staged and from where software **505** may be distributed, transported, downloaded, or otherwise provided to yet another computing system for deployment and execution, or yet additional distribution.

In embodiments where the system **500** includes multiple computing devices, the server can include one or more communications networks that facilitate communication among the computing devices. For example, the one or more communications networks can include a local or wide area network that facilitates communication among the computing devices. One or more direct communication links can be included between the computing devices. In addition, in some cases, the computing devices can be installed at geographically distributed locations. In other cases, the multiple computing devices can be installed at a single geographic location, such as a server farm or an office.

A communication interface **525** may be included, providing communication connections and devices that allow for communication between system **500** and other computing systems (not shown) over a communication network or collection of networks (not shown) or the air.

Certain techniques set forth herein with respect to organizational data governance may be described in the general context of computer-executable instructions, such as program modules, executed by one or more computing devices including holographic enabled devices. Generally, program modules include routines, programs, objects, components, and data structures that perform particular tasks or implement particular abstract data types.

Alternatively, or in addition, the functionality, methods and processes described herein can be implemented, at least in part, by one or more hardware modules (or logic components). For example, the hardware modules can include, but are not limited to, application-specific integrated circuit (ASIC) chips, field programmable gate arrays (FPGAs), system-on-a-chip (SoC) systems, complex programmable logic devices (CPLDs) and other programmable logic devices now known or later developed. When the hardware modules are activated, the hardware modules perform the functionality, methods and processes included within the hardware modules.

Embodiments may be implemented as a computer process, a computing system, or as an article of manufacture, such as a computer program product or computer-readable medium. Certain methods and processes described herein can be embodied as software, code and/or data, which may be stored on one or more storage media. Certain embodiments of the invention contemplate the use of a machine in the form of a computer system within which a set of instructions, when executed, can cause the system to perform any one or more of the methodologies discussed above. Certain computer program products may be one or more computer-readable storage media readable by a computer system and encoding a computer program of instructions for executing a computer process.

Computer-readable media can be any available computer-readable storage media or communication media that can be accessed by the computer system.

Communication media include the media by which a communication signal containing, for example, computer-readable instructions, data structures, program modules, or other data, is transmitted from one system to another system. The communication media can include guided transmission media, such as cables and wires (e.g., fiber optic, coaxial, and the like), and wireless (unguided transmission) media, such as acoustic, electromagnetic, RF, microwave and infrared, that can propagate energy waves. Although described with respect to communication media, carrier waves and other propagating signals that may contain data usable by a computer system are not considered computer-readable "storage media."

By way of example, and not limitation, computer-readable storage media may include volatile and non-volatile, removable and non-removable media implemented in any method or technology for storage of information such as computer-readable instructions, data structures, program modules or other data. Examples of computer-readable storage media include volatile memory such as random access memories (RAM, DRAM, SRAM); non-volatile memory such as flash memory, various read-only-memories (ROM, PROM, EPROM, EEPROM), phase change memory, magnetic and ferromagnetic/ferroelectric memories (MRAM, FeRAM), and magnetic and optical storage devices (hard drives, magnetic tape, CDs, DVDs). As used herein, in no case does the term "storage media" consist of carrier waves or propagating signals.

Although the subject matter has been described in language specific to structural features and/or acts, it is to be understood that the subject matter defined in the appended claims is not necessarily limited to the specific features or acts described above. The invention is defined by the appended claims.

## Claims

1. A system (102) comprising:
a processing system;
a storage system; and
instructions stored on the storage system that when executed by the processing system direct the processing system to at least, following receipt (205) of a request to obtain organizational data common to a first user and a second user:
access (210) first content of the first user and second content of the second user, each of the first content and second content including at least one of organizational data which is work content owned by an organization and personal data which is personal to the user;
identify (215) first entities from the first content of the first user and second entities from the second content of the second user;
assign an associated overall score to each of the first entities identified from the first content of the first user and each of the second entities identified from the second content of the second user, the overall score being comprised of a plurality of scores including one or more of a recency score, a frequency score, a shared communication score, a content type score, and a keywords score;
determine (220) any entities that are organizational entities and that are common between the first entities identified from the first content of the first user and the second entities identified from the second content of the second user by, for each entity, comparing the overall score for the entity identified from the first content of the first user with the overall score for the entity identified from the second content of the second user; and
for each common organizational entity identified in the determining step:
identify (225) corresponding second content of the second user associated with that common organizational entity; and
determine (230) whether the corresponding second content is organizational data or personal data; and
perform (235) an action on the corresponding second content determined to be the organizational data wherein the instructions to perform (235) the action on the corresponding second content determined to be the organizational data direct the processing system to change a location of the corresponding second content to work storage , wherein the designated organizational data is made available to an organizational search engine, such that the content may be indexed and made retrievable by users.

2. The system of claim 1, wherein the instructions to access the first content of the first user direct the processing system to:
access the first content in a local storage of a computing device of the first user; and
access the first content in a cloud storage account associated with the first user,
wherein the instructions to access the second content of the second user direct the processing system to:
access the second content in a local storage of a computing device of the second user; and
access the second content in a cloud storage account associated with the second user.

3. The system of claim 1,configured to annotate the second content with a specific warning indicating that copy of the content has been moved over to a business folder of the user in the work storage and asking if the user would like to open that copy.

4. The system of claim 1, wherein the instructions are such that, for each common organizational entity:
identifying (225) the corresponding second content of the second user associated with that common organizational entity comprises analyzing the second content to determine if the second content contains that common organizational entity, and
determining (230) whether the corresponding second content is the organizational data or the personal data comprises performing document classification on the corresponding second content to produce at least a score indicating a likelihood that the corresponding second content is the organizational data, wherein corresponding second content having a score above a threshold is determined to be the organizational data.

5. A computer program having instructions that, when executed by a processing system, perform a method comprising, following receipt (205) of a request to obtain organizational data common to a first user and a second user:
accessing (210) first content of the first user and second content of the second user, each of the first content and second content including at least one of organizational data which is work content owned by an organization and personal data which is personal to the user;
identifying (215) first entities from the first content of the first user and second entities from the second content of the second user;
assign an associated overall score to each of the first entities identified from the first content of the first user and each of the second entities identified from the second content of the second user, the overall score being comprised of a plurality of scores including one or more of a recency score, a frequency score, a shared communication score, a content type score, and a keywords score;
determining (220) any entities that are organizational entities and that are common between the first entities identified from the first content of the first user and the second entities identified from the second content of the second user by, for each entity, comparing the overall score for the entity identified from the first content of the first user with the overall score for the entity identified from the second content of the second user; and
for each common organizational entity identified in the determining step:
identifying (225) corresponding second content of the second user associated with that common organizational entity; and
determining (230) whether the corresponding second content is organizational data or personal data; and
performing (235) an action on the corresponding second content determined to be the organizational data wherein the instructions to perform (235) the action on the corresponding second content determined to be the organizational data direct the processing system to change a location of the corresponding second content to work storage , wherein the designated organizational data is made available to an organizational search engine, such that the content may be indexed and made retrievable by users.

6. The computer program of claim 5, wherein, for each common organizational entity:
identifying (225) the corresponding second content of the second user associated with that common organizational entity comprises analyzing the second content to determine if the second content contains that common organizational entity, and
determining (230) whether the corresponding second content is the organizational data or the personal data comprises: performing document classification on the corresponding second content to produce at least a score indicating a likelihood that the corresponding second content is the organizational data, wherein corresponding second content having a score above a threshold is determined to be the organizational data.

7. The computer program of claim 5, wherein performing (235) the action on the corresponding second content determined to be the organizational data comprises applying a different data governance to the corresponding second content.

8. The computer program of claim 5, wherein:
accessing the first content of the first user comprises accessing the first content in a local storage of a computing device of the first user and accessing the first content in a cloud storage account associated with the first user, and
accessing the second content of the second user comprises accessing the second content in a local storage of a computing device of the second user and accessing the second content in a cloud storage account associated with the second user.

9. A method comprising:
receiving (205) a request to obtain organizational data common to a first user and a second user;
accessing (210) first content of the first user and second content of the second user, each of the first content and second content including at least one of organizational data which is work content owned by an organization and personal data which is personal to the user;
identifying (215) first entities from the first content of the first user and second entities from the second content of the second user;
assign an associated overall score to each of the first entities identified from the first content of the first user and each of the second entities identified from the second content of the second user, the overall score being comprised of a plurality of scores including one or more of a recency score, a frequency score, a shared communication score, a content type score, and a keywords score;
determining (220) any entities that are organizational entities and that are common between the first entities identified from the first content of the first user and the second entities identified from the second content of the second user by, for each entity, comparing the overall score for the entity identified from the first content of the first user with the overall score for the entity identified from the second content of the second user; and
for each common organizational entity identified in the determining step:
identifying (225) corresponding second content of the second user associated with that common organizational entity; and
determining (230) whether the corresponding second content is organizational data or personal data; and
performing (235) an action on the corresponding second content determined to be the organizational data wherein the instructions to perform (235) the action on the corresponding second content determined to be the organizational data direct the processing system to change a location of the corresponding second content to work storage , wherein the designated organizational data is made available to an organizational search engine, such that the content may be indexed and made retrievable by users.

10. The method of claim 9, further comprising:
for each common organizational entity identified in the determining step:
identifying corresponding first content of the first user associated with that common entity;
determining whether the corresponding first content is organizational data or personal data; and
performing an action on the corresponding first content determined to be the organizational data.

11. The method of claim 9, wherein the first user is a business owner, and the second user is an employee of the first user.

12. The method of claim 9, wherein the first content of the first user and the second content of the second user comprise one or more of an email, a document, and an instant message chat.

13. The method of claim 9, wherein the request to obtain organizational data common to a first user and a second user comprises an indication of express permission from the first user to access the first content and an indication of express permission from the second user to access the second content.

14. The method of claim 9, wherein:
accessing (210) the first content of the first user comprises accessing the first content in a local storage of a computing device of the first user and accessing the first content in a cloud storage account associated with the first user, and
accessing (210) the second content of the second user comprises accessing the second content in a local storage of a computing device of the second user and accessing the second content in a cloud storage account associated with the second user.

## Patentansprüche

1. Ein System (102), umfassend:
ein Verarbeitungssystem;
ein Speichersystem; und
Anweisungen, die auf dem Speichersystem gespeichert sind und bei Ausführung durch das Verarbeitungssystem das Verarbeitungssystem zumindest dazu veranlassen, nach dem Empfang (205) einer Anforderung zum Abrufen organisatorischer Daten, die dem ersten Benutzer und dem zweiten Benutzer gemeinsam sind:
- Zugreifen (210) auf erste Inhalte des ersten Benutzers und zweite Inhalte des zweiten Benutzers, wobei jeder der ersten Inhalte und der zweiten Inhalte mindestens eine der folgenden Datenarten umfasst: organisatorische Daten, die Arbeitsinhalte sind und einer Organisation gehören, und persönliche Daten, die dem Benutzer persönlich zugeordnet sind;
- Identifizieren (215) erster Entitäten aus den ersten Inhalten des ersten Benutzers und zweiter Entitäten aus den zweiten Inhalten des zweiten Benutzers;
- Zuweisen eines zugehörigen Gesamtscores zu jeder der aus den ersten Inhalten des ersten Benutzers identifizierten ersten Entitäten und jeder der aus den zweiten Inhalten des zweiten Benutzers identifizierten zweiten Entitäten, wobei der Gesamtscore aus einer Vielzahl von Einzelwerten besteht, einschließlich einem oder mehreren der folgenden: Aktualitätswert, Häufigkeitswert, gemeinsamer Kommunikationswert, Inhaltstypwert und Schlüsselwortwert;
- Bestimmen (220) aller Entitäten, die organisatorische Entitäten sind und die sowohl in den aus den ersten Inhalten des ersten Benutzers als auch in den aus den zweiten Inhalten des zweiten Benutzers identifizierten Entitäten vorkommen, indem für jede Entität der Gesamtscore der aus den ersten Inhalten identifizierten Entität mit dem Gesamtscore der aus den zweiten Inhalten identifizierten Entität verglichen wird; und
- für jede im Bestimmungsschritt identifizierte gemeinsame organisatorische Entität:
- Identifizieren (225) entsprechender zweiter Inhalte des zweiten Benutzers, die mit dieser gemeinsamen organisatorischen Entität verknüpft sind; und
- Bestimmen (230), ob die entsprechenden zweiten Inhalte organisatorische Daten oder persönliche Daten sind; und
- Ausführen (235) einer Aktion an den als organisatorische Daten bestimmten entsprechenden zweiten Inhalten, wobei die Anweisungen zur Ausführung (235) der Aktion das Verarbeitungssystem anweisen, den Speicherort der entsprechenden zweiten Inhalte in den Arbeitsspeicher zu ändern, wobei die bestimmten organisatorischen Daten einer organisatorischen Suchmaschine zur Verfügung gestellt werden, sodass die Inhalte indexiert und von Benutzern auffindbar gemacht werden können.

2. Das System nach Anspruch 1, wobei die Anweisungen zum Zugreifen auf die ersten Inhalte des ersten Benutzers das Verarbeitungssystem veranlassen:
- auf die ersten Inhalte in einem lokalen Speicher eines Rechengeräts des ersten Benutzers zuzugreifen; und
- auf die ersten Inhalte in einem mit dem ersten Benutzer verknüpften Cloud-Speicherkonto zuzugreifen,
wobei die Anweisungen zum Zugreifen auf die zweiten Inhalte des zweiten Benutzers das Verarbeitungssystem veranlassen:
- auf die zweiten Inhalte in einem lokalen Speicher eines Rechengeräts des zweiten Benutzers zuzugreifen; und
- auf die zweiten Inhalte in einem mit dem zweiten Benutzer verknüpften Cloud-Speicherkonto zuzugreifen.

3. Das System nach Anspruch 1, das so konfiguriert ist, dass es die zweiten Inhalte mit einem spezifischen Hinweis versieht, der angibt, dass eine Kopie der Inhalte in einen Geschäftsordner des Benutzers im Arbeitsspeicher verschoben wurde, und fragt, ob der Benutzer diese Kopie öffnen möchte.

4. Das System nach Anspruch 1, wobei die Anweisungen so beschaffen sind, dass für jede gemeinsame organisatorische Entität:
- das Identifizieren (225) der entsprechenden zweiten Inhalte des zweiten Benutzers, die mit dieser gemeinsamen organisatorischen Entität verknüpft sind, das Analysieren der zweiten Inhalte umfasst, um zu bestimmen, ob die zweiten Inhalte diese gemeinsame organisatorische Entität enthalten, und
- das Bestimmen (230), ob die entsprechenden zweiten Inhalte organisatorische Daten oder persönliche Daten sind, das Durchführen einer Dokumentklassifikation an den entsprechenden zweiten Inhalten umfasst, um mindestens einen Score zu erzeugen, der eine Wahrscheinlichkeit angibt, dass die entsprechenden zweiten Inhalte organisatorische Daten sind, wobei entsprechende zweite Inhalte mit einem Score über einem Schwellenwert als organisatorische Daten bestimmt werden.

5. Ein Computerprogramm mit Anweisungen, die bei Ausführung durch ein Verarbeitungssystem ein Verfahren ausführen, das nach dem Empfang (205) einer Anforderung zum Abrufen organisatorischer Daten, die dem ersten Benutzer und dem zweiten Benutzer gemeinsam sind, Folgendes umfasst:
- Zugreifen (210) auf erste Inhalte des ersten Benutzers und zweite Inhalte des zweiten Benutzers, wobei jeder der ersten Inhalte und der zweiten Inhalte mindestens eine der folgenden Datenarten umfasst: organisatorische Daten, die Arbeitsinhalte sind und einer Organisation gehören, und persönliche Daten, die dem Benutzer persönlich zugeordnet sind;
- Identifizieren (215) erster Entitäten aus den ersten Inhalten des ersten Benutzers und zweiter Entitäten aus den zweiten Inhalten des zweiten Benutzers;
- Zuweisen eines zugehörigen Gesamtscores zu jeder der aus den ersten Inhalten des ersten Benutzers identifizierten ersten Entitäten und jeder der aus den zweiten Inhalten des zweiten Benutzers identifizierten zweiten Entitäten, wobei der Gesamtscore aus einer Vielzahl von Einzelwerten besteht, einschließlich einem oder mehreren der folgenden: Aktualitätswert, Häufigkeitswert, gemeinsamer Kommunikationswert, Inhaltstypwert und Schlüsselwortwert;
- Bestimmen (220) aller Entitäten, die organisatorische Entitäten sind und die sowohl in den aus den ersten Inhalten des ersten Benutzers als auch in den aus den zweiten Inhalten des zweiten Benutzers identifizierten Entitäten vorkommen, indem für jede Entität der Gesamtscore der aus den ersten Inhalten identifizierten Entität mit dem Gesamtscore der aus den zweiten Inhalten identifizierten Entität verglichen wird; und
- für jede im Bestimmungsschritt identifizierte gemeinsame organisatorische Entität:
- Identifizieren (225) entsprechender zweiter Inhalte des zweiten Benutzers, die mit dieser gemeinsamen organisatorischen Entität verknüpft sind; und
- Bestimmen (230), ob die entsprechenden zweiten Inhalte organisatorische Daten oder persönliche Daten sind; und
- Ausführen (235) einer Aktion an den als organisatorische Daten bestimmten entsprechenden zweiten Inhalten, wobei die Anweisungen zur Ausführung (235) der Aktion das Verarbeitungssystem anweisen, den Speicherort der entsprechenden zweiten Inhalte in den Arbeitsspeicher zu ändern, wobei die bestimmten organisatorischen Daten einer organisatorischen Suchmaschine zur Verfügung gestellt werden, sodass die Inhalte indexiert und von Benutzern auffindbar gemacht werden können.

6. Das Computerprogramm nach Anspruch 5, wobei für jede gemeinsame organisatorische Entität:
- das Identifizieren (225) der entsprechenden zweiten Inhalte des zweiten Benutzers, die mit dieser gemeinsamen organisatorischen Entität verknüpft sind, das Analysieren der zweiten Inhalte umfasst, um zu bestimmen, ob die zweiten Inhalte diese gemeinsame organisatorische Entität enthalten, und
- das Bestimmen (230), ob die entsprechenden zweiten Inhalte organisatorische Daten oder persönliche Daten sind, das Durchführen einer Dokumentklassifikation an den entsprechenden zweiten Inhalten umfasst, um mindestens einen Score zu erzeugen, der eine Wahrscheinlichkeit angibt, dass die entsprechenden zweiten Inhalte organisatorische Daten sind, wobei entsprechende zweite Inhalte mit einem Score über einem Schwellenwert als organisatorische Daten bestimmt werden.

7. Das Computerprogramm nach Anspruch 5, wobei das Ausführen (235) der Aktion an den als organisatorische Daten bestimmten entsprechenden zweiten Inhalten das Anwenden einer anderen Datenverwaltung auf die entsprechenden zweiten Inhalte umfasst.

8. Das Computerprogramm nach Anspruch 5, wobei:
- das Zugreifen auf die ersten Inhalte des ersten Benutzers das Zugreifen auf die ersten Inhalte in einem lokalen Speicher eines Rechengeräts des ersten Benutzers und das Zugreifen auf die ersten Inhalte in einem mit dem ersten Benutzer verknüpften Cloud-Speicherkonto umfasst, und
- das Zugreifen auf die zweiten Inhalte des zweiten Benutzers das Zugreifen auf die zweiten Inhalte in einem lokalen Speicher eines Rechengeräts des zweiten Benutzers und das Zugreifen auf die zweiten Inhalte in einem mit dem zweiten Benutzer verknüpften Cloud-Speicherkonto umfasst.
ss

9. Ein Verfahren, umfassend:
- Empfangen (205) einer Anforderung zum Abrufen organisatorischer Daten, die dem ersten Benutzer und dem zweiten Benutzer gemeinsam sind;
- Zugreifen (210) auf erste Inhalte des ersten Benutzers und zweite Inhalte des zweiten Benutzers, wobei jeder der ersten Inhalte und der zweiten Inhalte mindestens eine der folgenden Datenarten umfasst: organisatorische Daten, die Arbeitsinhalte sind und einer Organisation gehören, und persönliche Daten, die dem Benutzer persönlich zugeordnet sind;
- Identifizieren (215) erster Entitäten aus den ersten Inhalten des ersten Benutzers und zweiter Entitäten aus den zweiten Inhalten des zweiten Benutzers;
- Zuweisen eines zugehörigen Gesamtscores zu jeder der aus den ersten Inhalten des ersten Benutzers identifizierten ersten Entitäten und jeder der aus den zweiten Inhalten des zweiten Benutzers identifizierten zweiten Entitäten, wobei der Gesamtscore aus einer Vielzahl von Einzelwerten besteht, einschließlich einem oder mehreren der folgenden: Aktualitätswert, Häufigkeitswert, gemeinsamer Kommunikationswert, Inhaltstypwert und Schlüsselwortwert;
- Bestimmen (220) aller Entitäten, die organisatorische Entitäten sind und die sowohl in den aus den ersten Inhalten des ersten Benutzers als auch in den aus den zweiten Inhalten des zweiten Benutzers identifizierten Entitäten vorkommen, indem für jede Entität der Gesamtscore der aus den ersten Inhalten identifizierten Entität mit dem Gesamtscore der aus den zweiten Inhalten identifizierten Entität verglichen wird; und
- für jede im Bestimmungsschritt identifizierte gemeinsame organisatorische Entität:
- Identifizieren (225) entsprechender zweiter Inhalte des zweiten Benutzers, die mit dieser gemeinsamen organisatorischen Entität verknüpft sind; und
- Bestimmen (230), ob die entsprechenden zweiten Inhalte organisatorische Daten oder persönliche Daten sind; und
- Ausführen (235) einer Aktion an den als organisatorische Daten bestimmten entsprechenden zweiten Inhalten, wobei die Anweisungen zur Ausführung (235) der Aktion das Verarbeitungssystem anweisen, den Speicherort der entsprechenden zweiten Inhalte in den Arbeitsspeicher zu ändern, wobei die bestimmten organisatorischen Daten einer organisatorischen Suchmaschine zur Verfügung gestellt werden, sodass die Inhalte indexiert und von Benutzern auffindbar gemacht werden können.

10. Das Verfahren nach Anspruch 9, ferner umfassend:
- für jede im Bestimmungsschritt identifizierte gemeinsame organisatorische Entität:
- Identifizieren entsprechender erster Inhalte des ersten Benutzers, die mit dieser gemeinsamen Entität verknüpft sind;
- Bestimmen, ob die entsprechenden ersten Inhalte organisatorische Daten oder persönliche Daten sind; und
- Ausführen einer Aktion an den als organisatorische Daten bestimmten entsprechenden ersten Inhalten.

11. Das Verfahren nach Anspruch 9, wobei der erste Benutzer ein Geschäftsinhaber ist und der zweite Benutzer ein Mitarbeiter des ersten Benutzers ist.

12. Das Verfahren nach Anspruch 9, wobei die ersten Inhalte des ersten Benutzers und die zweiten Inhalte des zweiten Benutzers eine oder mehrere der folgenden Datenarten umfassen: eine E-Mail, ein Dokument und einen Sofortnachrichten-Chat.

13. Das Verfahren nach Anspruch 9, wobei die Anforderung zum Abrufen organisatorischer Daten, die dem ersten Benutzer und dem zweiten Benutzer gemeinsam sind, eine Angabe einer ausdrücklichen Zustimmung des ersten Benutzers zum Zugriff auf die ersten Inhalte und eine Angabe einer ausdrücklichen Zustimmung des zweiten Benutzers zum Zugriff auf die zweiten Inhalte umfasst.

14. Das Verfahren nach Anspruch 9, wobei:
- das Zugreifen (210) auf die ersten Inhalte des ersten Benutzers das Zugreifen auf die ersten Inhalte in einem lokalen Speicher eines Rechengeräts des ersten Benutzers und das Zugreifen auf die ersten Inhalte in einem mit dem ersten Benutzer verknüpften Cloud-Speicherkonto umfasst, und
- das Zugreifen (210) auf die zweiten Inhalte des zweiten Benutzers das Zugreifen auf die zweiten Inhalte in einem lokalen Speicher eines Rechengeräts des zweiten Benutzers und das Zugreifen auf die zweiten Inhalte in einem mit dem zweiten Benutzer verknüpften Cloud-Speicherkonto umfasst.

## Revendications

1. Système (102), comprenant :
un système de traitement ;
un système de stockage ; et
des instructions stockées sur le système de stockage qui, lorsqu'elles sont exécutées par le système de traitement, amènent le système de traitement, après réception (205) d'une requête visant à obtenir des données organisationnelles communes à un premier utilisateur et à un deuxième utilisateur, à au moins :
accéder (210) à un premier contenu du premier utilisateur et à un deuxième contenu du deuxième utilisateur, chacun du premier contenu et du deuxième contenu comprenant au moins l'une des données parmi des données organisationnelles qui représentent un contenu de travail appartenant à une organisation et des données personnelles qui sont personnelles à l'utilisateur ;
identifier (215) des premières entités à partir du premier contenu du premier utilisateur et des deuxièmes entités à partir du deuxième contenu du deuxième utilisateur ;
attribuer un score global associé à chacune des premières entités identifiées à partir du premier contenu du premier utilisateur et à chacune des deuxièmes entités identifiées à partir du deuxième contenu du deuxième utilisateur, le score global étant composé d'une pluralité de scores comprenant un ou plusieurs scores parmi un score de récence, un score de fréquence, un score de communication partagée, un score de type de contenu et un score de mots-clés ;
déterminer (220) toute entité qui est une entité organisationnelle et qui est commune entre les premières entités identifiées à partir du premier contenu du premier utilisateur et les deuxièmes entités identifiées à partir du deuxième contenu du deuxième utilisateur, en comparant, pour chaque entité, le score global de l'entité identifiée à partir du premier contenu du premier utilisateur avec le score global de l'entité identifiée à partir du deuxième contenu du deuxième utilisateur ; et
pour chaque entité organisationnelle commune identifiée à l'étape de détermination :
identifier (225) un deuxième contenu correspondant du deuxième utilisateur associé à ladite entité organisationnelle commune ; et
déterminer (230) si le deuxième contenu correspondant représente ou non des données organisationnelles ou des données personnelles ; et
effectuer (235) une action sur le deuxième contenu correspondant qui est déterminé comme représentant les données organisationnelles, les instructions pour effectuer (235) l'action sur le deuxième contenu correspondant qui est déterminé comme représentant les données organisationnelles amenant le système de traitement à modifier un emplacement du deuxième contenu correspondant vers un stockage de travail, dans lequel les données organisationnelles désignées sont rendues disponibles à un moteur de recherche organisationnel de sorte que le contenu puisse être indexé et rendu récupérable par des utilisateurs.

2. Système selon la revendication 1, dans lequel les instructions pour accéder au premier contenu du premier utilisateur amènent le système de traitement à :
accéder au premier contenu dans un stockage local d'un dispositif informatique du premier utilisateur ; et
accéder au premier contenu dans un compte de stockage en nuage associé au premier utilisateur,
dans lequel les instructions pour accéder au deuxième contenu du deuxième utilisateur amènent le système de traitement à :
accéder au deuxième contenu dans un stockage local d'un dispositif informatique du deuxième utilisateur ; et
accéder au deuxième contenu dans un compte de stockage en nuage associé au deuxième utilisateur.

3. Système selon la revendication 1, configuré pour annoter le deuxième contenu avec un avertissement spécifique indiquant qu'une copie du contenu a été déplacée vers un dossier professionnel de l'utilisateur dans le stockage de travail, et demandant si l'utilisateur souhaite ouvrir ladite copie.

4. Système selon la revendication 1, dans lequel les instructions sont telles que, pour chaque entité organisationnelle commune :
l'identification (225) du deuxième contenu correspondant du deuxième utilisateur associé à ladite entité organisationnelle commune consiste à analyser le deuxième contenu afin de déterminer si le deuxième contenu contient ladite entité organisationnelle commune ; et
la détermination (230) de si le deuxième contenu correspondant représente ou non les données organisationnelles ou les données personnelles consiste à effectuer une classification de document sur le deuxième contenu correspondant afin de produire au moins un score indiquant une probabilité que le deuxième contenu correspondant représente les données organisationnelles, dans lequel un deuxième contenu correspondant ayant un score supérieur à un seuil est déterminé comme représentant les données organisationnelles.

5. Programme informatique comportant des instructions qui, lorsqu'elles sont exécutées par un système de traitement, effectuent un procédé consistant, après réception (205) d'une requête visant à obtenir des données organisationnelles communes à un premier utilisateur et à un deuxième utilisateur, à :
accéder (210) à un premier contenu du premier utilisateur et à un deuxième contenu du deuxième utilisateur, chacun du premier contenu et du deuxième contenu comprenant au moins l'une des données parmi des données organisationnelles qui représentent un contenu de travail appartenant à une organisation et des données personnelles qui sont personnelles à l'utilisateur ;
identifier (215) des premières entités à partir du premier contenu du premier utilisateur et des deuxièmes entités à partir du deuxième contenu du deuxième utilisateur ;
attribuer un score global associé à chacune des premières entités identifiées à partir du premier contenu du premier utilisateur et à chacune des deuxièmes entités identifiées à partir du deuxième contenu du deuxième utilisateur, le score global étant composé d'une pluralité de scores comprenant un ou plusieurs scores parmi un score de récence, un score de fréquence, un score de communication partagée, un score de type de contenu et un score de mots-clés ;
déterminer (220) toute entité qui est une entité organisationnelle et qui est commune entre les premières entités identifiées à partir du premier contenu du premier utilisateur et les deuxièmes entités identifiées à partir du deuxième contenu du deuxième utilisateur, en comparant, pour chaque entité, le score global de l'entité identifiée à partir du premier contenu du premier utilisateur avec le score global de l'entité identifiée à partir du deuxième contenu du deuxième utilisateur ; et
pour chaque entité organisationnelle commune identifiée à l'étape de détermination :
identifier (225) un deuxième contenu correspondant du deuxième utilisateur associé à ladite entité organisationnelle commune ; et
déterminer (230) si le deuxième contenu correspondant représente ou non des données organisationnelles ou des données personnelles ; et
effectuer (235) une action sur le deuxième contenu correspondant qui est déterminé comme représentant les données organisationnelles, les instructions pour effectuer (235) l'action sur le deuxième contenu correspondant qui est déterminé comme représentant les données organisationnelles amenant le système de traitement à modifier un emplacement du deuxième contenu correspondant vers un stockage de travail, dans lequel les données organisationnelles désignées sont rendues disponibles à un moteur de recherche organisationnel de sorte que le contenu puisse être indexé et rendu récupérable par des utilisateurs.

6. Programme informatique selon la revendication 5, dans lequel, pour chaque entité organisationnelle commune :
l'identification (225) du deuxième contenu correspondant du deuxième utilisateur associé à ladite entité organisationnelle commune consiste à analyser le deuxième contenu afin de déterminer si le deuxième contenu contient ladite entité organisationnelle commune ; et
la détermination (230) de si le deuxième contenu correspondant représente ou non les données organisationnelles ou les données personnelles consiste à effectuer une classification de document sur le deuxième contenu correspondant afin de produire au moins un score indiquant une probabilité que le deuxième contenu correspondant représente les données organisationnelles, dans lequel un deuxième contenu correspondant ayant un score supérieur à un seuil est déterminé comme représentant les données organisationnelles.

7. Programme informatique selon la revendication 5, dans lequel l'exécution (235) de l'action sur le deuxième contenu correspondant déterminé comme représentant les données organisationnelles consiste à appliquer une gouvernance de données différente au deuxième contenu correspondant.

8. Programme informatique selon la revendication 5, dans lequel :
l'accès au premier contenu du premier utilisateur consiste à accéder au premier contenu dans un stockage local d'un dispositif informatique du premier utilisateur, et à accéder au premier contenu dans un compte de stockage en nuage associé au premier utilisateur ; et
l'accès au deuxième contenu du deuxième utilisateur consiste à accéder au deuxième contenu dans un stockage local d'un dispositif informatique du deuxième utilisateur, et à accéder au deuxième contenu dans un compte de stockage en nuage associé au deuxième utilisateur.

9. Procédé, consistant à :
recevoir (205) une requête visant à obtenir des données organisationnelles communes à un premier utilisateur et à un deuxième utilisateur ;
accéder (210) à un premier contenu du premier utilisateur et à un deuxième contenu du deuxième utilisateur, chacun du premier contenu et du deuxième contenu comprenant au moins l'une des données parmi des données organisationnelles qui représentent un contenu de travail appartenant à une organisation et des données personnelles qui sont personnelles à l'utilisateur ;
identifier (215) des premières entités à partir du premier contenu du premier utilisateur et des deuxièmes entités à partir du deuxième contenu du deuxième utilisateur ;
attribuer un score global associé à chacune des premières entités identifiées à partir du premier contenu du premier utilisateur et à chacune des deuxièmes entités identifiées à partir du deuxième contenu du deuxième utilisateur, le score global étant composé d'une pluralité de scores comprenant un ou plusieurs scores parmi un score de récence, un score de fréquence, un score de communication partagée, un score de type de contenu et un score de mots-clés ;
déterminer (220) toute entité qui est une entité organisationnelle et qui est commune entre les premières entités identifiées à partir du premier contenu du premier utilisateur et les deuxièmes entités identifiées à partir du deuxième contenu du deuxième utilisateur, en comparant, pour chaque entité, le score global de l'entité identifiée à partir du premier contenu du premier utilisateur avec le score global de l'entité identifiée à partir du deuxième contenu du deuxième utilisateur ; et
pour chaque entité organisationnelle commune identifiée à l'étape de détermination :
identifier (225) un deuxième contenu correspondant du deuxième utilisateur associé à ladite entité organisationnelle commune ; et
déterminer (230) si le deuxième contenu correspondant représente ou non des données organisationnelles ou des données personnelles ; et
effectuer (235) une action sur le deuxième contenu correspondant qui est déterminé comme représentant les données organisationnelles, les instructions pour effectuer (235) l'action sur le deuxième contenu correspondant qui est déterminé comme représentant les données organisationnelles amenant le système de traitement à modifier un emplacement du deuxième contenu correspondant vers un stockage de travail, dans lequel les données organisationnelles désignées sont rendues disponibles à un moteur de recherche organisationnel de sorte que le contenu puisse être indexé et rendu récupérable par des utilisateurs.

10. Procédé selon la revendication 9, consistant en outre,
pour chaque entité organisationnelle commune identifiée à l'étape de détermination, à :
identifier un premier contenu correspondant du premier utilisateur associé à ladite entité commune ;
déterminer si le premier contenu correspondant représente ou non des données organisationnelles ou des données personnelles ; et
effectuer une action sur le premier contenu correspondant qui est déterminé comme représentant les données organisationnelles.

11. Procédé selon la revendication 9, dans lequel le premier utilisateur est un propriétaire d'entreprise et le deuxième utilisateur est un employé du premier utilisateur.

12. Procédé selon la revendication 9, dans lequel le premier contenu du premier utilisateur et le deuxième contenu du deuxième utilisateur comprennent un ou plusieurs de ce qui suit : un courriel, un document et une conversation de messagerie instantanée.

13. Procédé selon la revendication 9, dans lequel la requête visant à obtenir des données organisationnelles communes à un premier utilisateur et à un deuxième utilisateur comprend une indication d'autorisation expresse du premier utilisateur pour accéder au premier contenu et une indication d'autorisation expresse du deuxième utilisateur pour accéder au deuxième contenu.

14. Procédé selon la revendication 9, dans lequel :
accéder (210) au premier contenu du premier utilisateur consiste à accéder au premier contenu dans un stockage local d'un dispositif informatique du premier utilisateur, et à accéder au premier contenu dans un compte de stockage en nuage associé au premier utilisateur ; et
accéder (210) au deuxième contenu du deuxième utilisateur consiste à accéder au deuxième contenu dans un stockage local d'un dispositif informatique du deuxième utilisateur, et à accéder au deuxième contenu dans un compte de stockage en nuage associé au deuxième utilisateur.
